# EUROPÄISCHE PATENTSCHRIFT

(11) **EP 2 195 209 B1**
(45) Veröffentlichungstag und Bekanntmachung des Hinweises auf die Patenterteilung: **30.03.2016**
(21) Anmeldenummer: 08802545.7
(22) Anmeldetag: 24.09.2008
(51) Int. Cl.: B60R 22/405, B60R 22/41

(54) **SELBSTSPERRENDER GURTAUFROLLER**
SELF-LOCKING BELT RETRACTOR
ENROULEUR DE CEINTURE DE SÉCURITÉ AUTO-BLOQUANT

(30) Priorität: 10.10.2007 DE 102007048804
(43) Veröffentlichungstag der Anmeldung: 16.06.2010
(73) Patentinhaber: Autoliv Development AB, 447 83 Vårgårda (SE)
(72) Erfinder: CARSTENS, Volker, 25597 Westermoor (DE); KRÖGER, Doris, 25436 Tornesch (DE); BUTENOP, Klaus, 25379 Herzhorn (DE)
(74) Vertreter: Müller Verweyen
(86) Internationale Anmeldenummer: PCT/EP2008/008061
(87) Internationale Veröffentlichungsnummer: WO 2009/049754

(56) Entgegenhaltungen:
- EP-A- 0 216 068
- EP-A- 1 391 357
- DE-A1- 10 213 248
- DE-A1- 10 324 195

## Beschreibung

Die Erfindung betrifft einen selbstsperrenden Gurtaufroller für Sicherheitsgurte mit einer drehbar in einem Gehäuserahmen gelagerten und in Aufwickelrichtung des Gurtbandes von einer Aufwickelfeder vorgespannten Gurtwelle, einer sich mit der Gurtwelle drehenden Steuerscheibe zur Ansteuerung eines an der Gurtwelle bis zum Eingriff in eine Gehäuseverzahnung auslenkbar angeordneten Sperrgliedes, wobei die Steuerscheibe mittels eines die Gurtbandbeschleunigung sensierenden federbelasteten Trägheitselementes und/oder einem fahrzeugsensitiven Beschleunigungssensor gegen eine Federvorspannung in eine Relativdrehung gegenüber der Gurtwelle bringbar ist.

Das die Gurtbandbeschleunigung sensierende Trägheitselement hat die Aufgabe die Steuerscheibe bei sehr schnellem Gurtbandauszug gegenüber der sich drehenden Gurtwelle abzubremsen bzw. sogar anzuhalten. Gleiches erfolgt, wenn der die Fahrzeugbeschleunigung sensierende Sensor ein Überschreiten einer vorgegebenen Grenzbeschleunigung sensiert. Die Steuerscheibe besitzt eine Steuerkontur, mittels derer ein an der Gurtwelle gelagertes Sperrglied in der Bewegung in die Verriegelungsposition bzw. von der Verriegelungsposition in die Entriegelungsposition steuerbar ist, wenn die Steuerscheibe gegenüber der Drehung der Gurtwelle in eine Relativdrehung versetzt wird.

Nachteilig bei diesen bekannten Blockiersystemen ist jedoch, dass bei sehr schnellem Gurtbandeinlauf, vorzugsweise beim Ablegen des Gurtes, durch das abrupte Abstoppen der Gurtwelle am Ende des Gurtbandeinlaufes sowohl das gurtbandsensitive als auch das fahrzeugsensitive Blockiersystem ansprechen kann, und so die Gurtwelle unbeabsichtigt blockiert. Beim erneuten Anlegen des Gurtes ist die Gurtwelle dann verriegelt und muss erst durch Ausziehen eines gewissen Stückes Gurtband und anschließendem wieder Einlaufenlassens entriegelt werden. Dieser nötige Entriegelungsweg beträgt bei herkömmlichen Gurtaufrollern bis zu 10 mm Gurtweg. Dieser Entriegelungsweg ist bedingt durch die relativ langen Verriegelungswege der gurtbandsensitiven und fahrzeugsensitiven Blockiersysteme. Der Blockiervorgang beginnt dabei durch Einsteuern des fahrzeugsensitiven Blockierhebels in die Verzahnung der Steuerscheibe bzw. des Trägheitselementes in die gehäusefeste Verzahnung, so dass die Steuerscheibe in ihrer Drehung gegenüber der Gurtwelle angehalten wird. Mit der Verzögerung der Steuerscheibe beginnt der Aussteuervorgang des Sperrgliedes bestimmt durch die Steuerkontur in der Steuerscheibe. Der Aussteuervorgang endet mit der vollständigen Einsteuerung des Sperrgliedes in der gehäusefesten Verzahnung und der Blockierung der Gurtwelle. Zur Entriegelung der Gurtwelle muss dieser Vorgang rückwärts vollzogen werden, welches einen entsprechend langen Entriegelungsweg zur Folge hat.

DE 103 24 195 A1 offenbart einer gattungsgemäßen Gurtaufroller.

Ausgehend von diesem Stand der Technik liegt der Erfindung die Aufgabe zugrunde, einen Gurtaufroller zu schaffen, der bei unbeabsichtigter Blockierung mit einem möglichst kurzen Entriegelungsweg entriegelt werden kann.

Die Erfindung löst die gestellte Aufgabe durch die kennzeichnenden Merkmale des Anspruchs 1. Weitere vorteilhafte Aus- und Weiterbildungen sind in den Unteransprüchen angegeben.

Erfindungsgemäß wird nach ein selbstsperrender Gurtaufroller mit den Merkmalen von Anspruch 1 vorgeschlagen.

Damit wird die Steuerscheibe zu Beginn des Entriegelungsvorgangs durch einen geringen Gurtbandeinlauf durch die Kopplung zunächst um einen geringen Weg in Aufwickelrichtung mit der Gurtwelle gedreht. Dies wird dadurch erreicht, dass die Bewegung der Gurtwelle über das Sperrglied auf die Steuerscheibe übertragen wird. Durch die geringfügige Drehung der Steuerscheibe werden gleich zu Beginn des Entriegelungsvorgangs die Sensoren, welche die Steuerscheibe festlegen, freigestellt. Die Freistellung der Sensoren erfolgt dadurch, dass die Steuerscheibe geringfügig in Aufwickelrichtung gedreht wird und so das Trägheitselement an der Steuerscheibe aufgrund seiner Federbelastung in die entriegelte Stellung zurückschwenken kann, bzw. der Hebel des gehäusefesten Fahrzeugsensors aus der Verzahnung der Steuerscheibe schwenken kann. Die Kopplung soll über ein Federelement erfolgen, so dass das Ein- und Entkoppeln mit einer möglichst geringen Störung der Blockierbewegung erfolgen kann. Es wird weiter vorgeschlagen, dass das Sperrglied einen Stift aufweist, welcher in eine die Ausfuhrbewegung des Sperrgliedes bestimmende Steuerkontur der Steuerscheibe hineinragt und das Federelement an der Steuerkontur angeordnet ist. Da das Sperrglied über den Stift geführt wird und in jedem Fall in der Steuerkontur ein Kontakt besteht, bietet es sich an, auch das Federelement in der Steuerkontur anzuordnen, und so eine zuverlässige Kopplung sicherzustellen. Das Federelement ragt im wesentlichen orthogonal in die durch die Steuerkontur definierte Bahn der Ausfuhrbewegung, damit für die Ent- bzw. Verriegelung ungefähr gleichgroße Federkräfte zwischen Sperrglied und Steuerscheibe wirken.

Das Federelement sollte das Sperrglied in einer Richtung im wesentlichen parallel zu der durch die von der Steuerscheibe aufgespannten Ebene belasten, damit die Steuerscheibe in ihrer axialen Lage nicht durch entstehende Reaktionskräfte ausgelenkt wird.

Das Federelement ist bevorzugt einstückig mit der Steuerscheibe ausgebildet, so dass dieses bei dem Spritzvorgang der Steuerscheibe an diese bereits mit angeformt werden kann.

In einer weiteren bevorzugten Ausgestaltung der Erfindung wird vorgeschlagen, dass die Steuerscheibe und/oder das Sperrglied relativ zu der Gurtwelle in Richtung der Entriegelungsstellung des Sperrgliedes federvorgespannt sind, und dass das Sperrglied und die Steuerscheibe aus der Verriegelungsstellung durch Drehen der Gurtwelle in Gurtbandeinzugsrichtung nach dem Lösen der Kopplung durch die Federvorspannung selbsttätig in die Entriegelungsstellung bringbar sind. Damit wird die Gurtwelle ohne eine weitere Bewegung derselben in Gurtbandeinzugsrichtung entriegelt. Insgesamt ist für die gesamte Entriegelung der Gurtwelle nur die kurze Drehung der Gurtwelle in Gurtbandeinzugsrichtung zur Freistellung der Sensoren erforderlich.

Die Erfindung wird im Folgenden anhand eines bevorzugten Ausführungsbeispieles näher erläutert, wobei die Figuren im Einzelnen zeigen:
Fig.1: Gurtaufroller mit fahrzeugsensitiver und gurtbandsensitiver Blockiervorrichtung (Stand der Technik)
Fig.2: Sperrglied gekoppelt mit der Steuerscheibe über eine axiale Federzunge in Blockierstellüng
Fig.3: Sperrglied gekoppelt mit der Steuerscheibe über eine axiale Federzunge während des Entriegelungsvorgangs
Fig.4: Sperrglied gekoppelt mit der Steuerscheibe über eine axiale Federzunge in Entriegelungsstellung
Fig.5: Sperrglied gekoppelt mit der Steuerscheibe über eine axiale Federzunge in Schnittdarstellung A-A
Fig.6: Steuerscheibe mit radialer Federzunge und Sperrglied in Entriegelungsstellung
Fig.7: Steuerscheibe mit Sperrglied während des Verriegelungsvorgangs vor der Kopplung
Fig.8: Steuerscheibe mit angekoppeltem Sperrglied in Verriegelungsstellung
Fig.9: Steuerscheibe mit angekoppeltem Sperrglied und freigestellten Sensoren

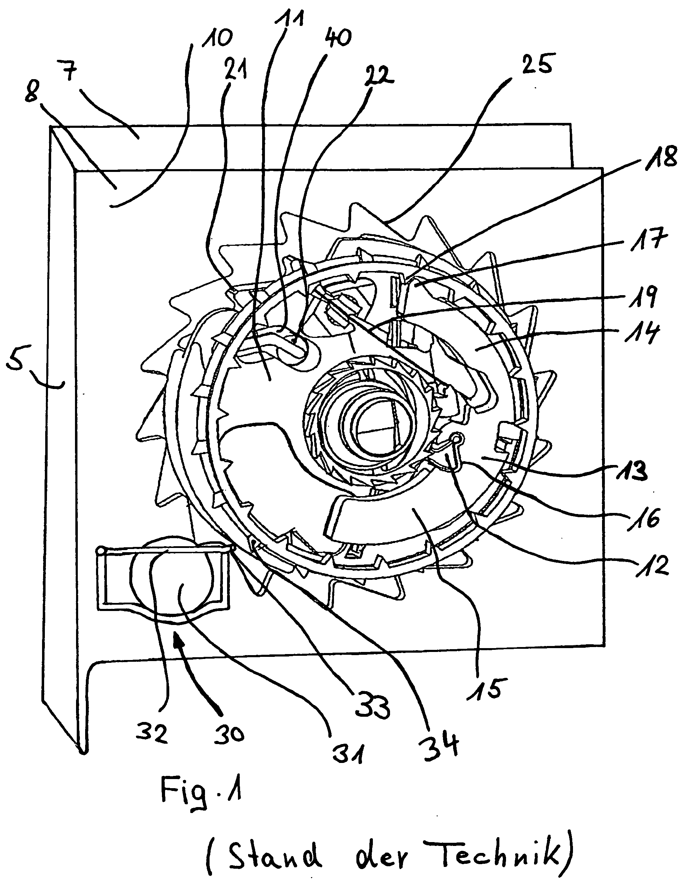

Zum besseren Verständnis der Erfindung wird in Fig.1 zunächst ein Gurtaufroller nach dem Stand der Technik mit fahrzeugsensitiver und gurtbandsensitiver Blockierung beschrieben. Der Gurtaufroller besitzt ein Gehäuse 5 mit den eine U-Form bildenden Gehäuseschenkeln 7 und 8. In den Gehäuseschenkeln 7 und 8 sind jeweils Öffnungen vorgesehen, durch die die Gurtwelle hindurchragt, wobei die gezeigte und für die Erfindung entscheidende Seite eine Verzahnung 25 aufweist. An der Stirnseite der nicht zu sehenden Gurtwelle befindet sich ein ausschwenkbares Sperrglied 21, welches mit einem Stift 22 in eine Steuerkontur 40 einer Steuerscheibe 11 hineinragt. An dem Schenkel 8 des Gehäuses 5 befindet sich ein fahrzeugsensitiver Beschleunigungssensor 30 mit einem Trägheitselement 31 und einem bei Auslenkung der Trägheitsmasse ausschwenkbaren Verriegelungsarm 32, der mit einer Eingriffsspitze 33 in eine Steuerverzahnung 34 eingreift und so die Steuerscheibe 11 anhält. Ferner befindet sich auf der Steuerscheibe 11 ein gurtbandsensitiver Beschleunigungssensor bestehend aus einem Trägheitselement 13, welches über eine Feder 19 in Richtung Entriegelungsstellung federbelastet ist und zwischen seinen Armen 14 und 15 über eine Lagerausnehmung 16 schwenkbar auf einem Lagervorsprung 12 gelagert ist. Bei sehr schnellem Gurtbandauszug schwenkt das Trägheitselement 13 unter Überwindung der Federkraft der Feder 19 aus und greift mit der Eingriffsspitze 17 in eine gehäusefeste Verzahnung 18, wodurch wiederum die Steuerscheibe 11 angehalten wird. Verursacht durch das Anhalten der Steuerscheibe 11 und die erzeugte Relativbewegung zwischen ihr und der Gurtwelle, wird das an der Gurtwelle gehaltene Sperrglied 21 durch den in der Steuerkontur geführten Stift 22 ausgefahren und verriegelt schließlich die Gurtwelle in der Verzahnung 25. Die Steuerscheibe 11 ist unmittelbar oder mittelbar über das Sperrglied 21 in Richtung Entriegelung der Gurtwelle bzw. eingefahrenes Sperrglied 21 federvorgespannt, so dass sich die Gurtwelle bei Nichteingriff der Sensoren frei drehen kann. Wird die Gurtwelle unbeabsichtigt verriegelt wie z.B. bei schnellem Gurtbandeinlauf, so muss zur Entriegelung der Gurtwelle der gesamte Verriegelungsvorgang mit anschließender Freistellung der Sensorik in rückwärtiger Abfolge durchgeführt werden.

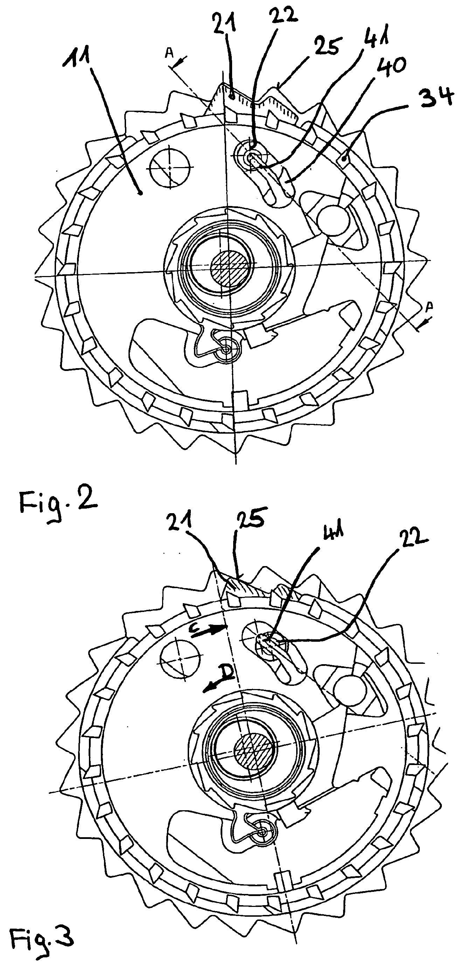

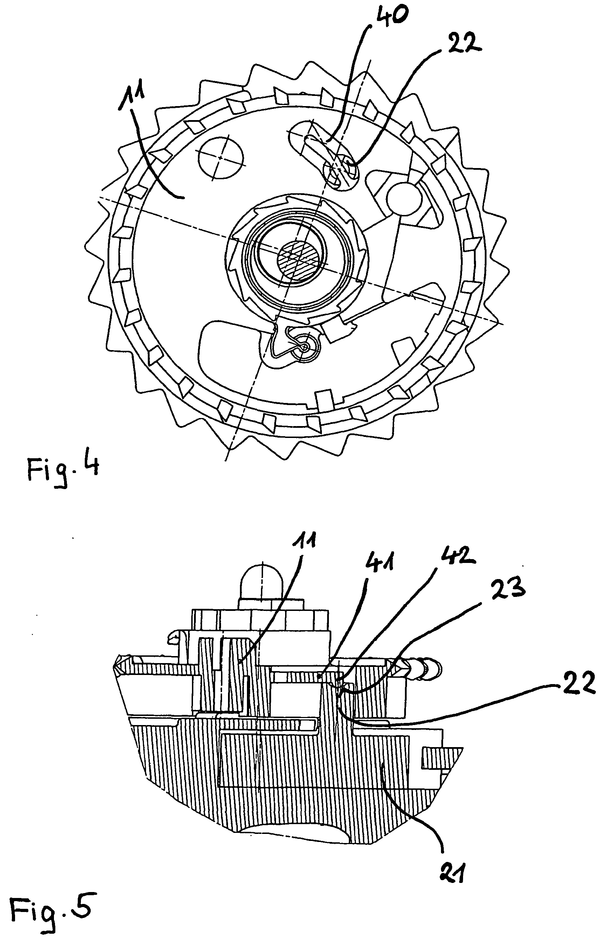

In Fig.2 ist nun eine Art der vorgeschlagenen Kopplung zwischen Steuerscheibe 11 und Sperrglied 21 dargestellt, bei der der in der Steuerkontur 40 geführte Stift 22 über ein Federelement 41 federbelastet ist. In Fig. 5 ist dieselbe Stellung in Schnittrichtung A-A dargestellt. Das Federelement 41 weist an seinem Ende eine Spitze 42 auf, welche in einer Vertiefung 23 des Stiftes 22 in der Verriegelungsstellung des Sperrgliedes 21 zu liegen kommt, und so die Steuerscheibe 11 mit dem Sperrglied 21 koppelt. Wird nun in der Verriegelungsstellung in Fig.2 eine geringfügige Menge Gurtband eingelassen und die Gurtwelle in Gurtbandeinzugsrichtung gedreht (Pfeilrichtung C in Figur 3), so wird die Steuerscheibe 11 wegen der Kopplung ebenfalls in Pfeilrichtung C gedreht. Das Mitdrehen der Steuerscheibe 11 wird dadurch erzeugt, dass sich das Sperrglied 21 an der Verzahnung 25 abstützt und so bei Gurtbandeinlauf direkt die Steuerscheibe 11 in Drehung versetzt. Durch die Bewegung der Steuerscheibe 11 wird es ermöglicht, dass der Verriegelungsarm 32 des fahrzeugsensitiven Sensors 30 aus der Steuerverzahnung 34 bzw. das Trägheitselement 13 des gurtbandsensitiven Sensors aus der gehäusefesten Verzahnung 18 in die Entriegelungsstellung zurückschwenken und so die Steuerscheibe 11 gleich zu Beginn des Entriegelungsvorganges gegenüber dem Gehäuse 5 gelöst wird. Nach dem Lösen der Steuerscheibe 11 kann diese zusammen mit dem Sperrglied 21 wegen der wirkenden Federkräfte in die Entriegelungsstellung zurückschwenken und führt dabei gegenüber der stehenden Gurtwelle eine Drehung in Pfeilrichtung D aus, wobei für diesen Entriegelungsvorgang kein weiterer Gurtbandeinzug erforderlich ist. Schließlich endet der Entriegelungsvorgang mit Erreichen der in Fig.4 dargestellten Entriegelungsstellung, in der das Sperrglied 21 vollständig eingefahren ist.

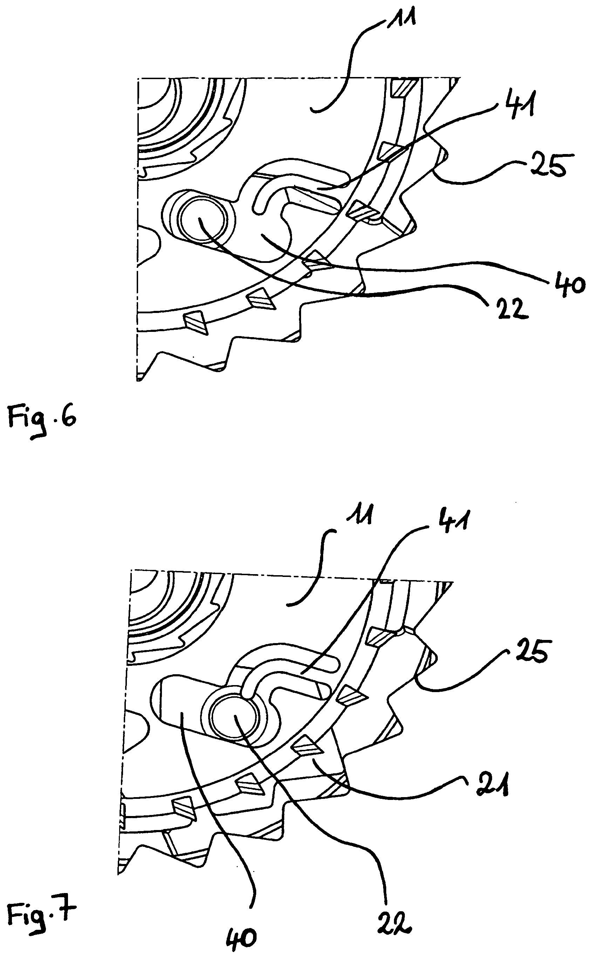

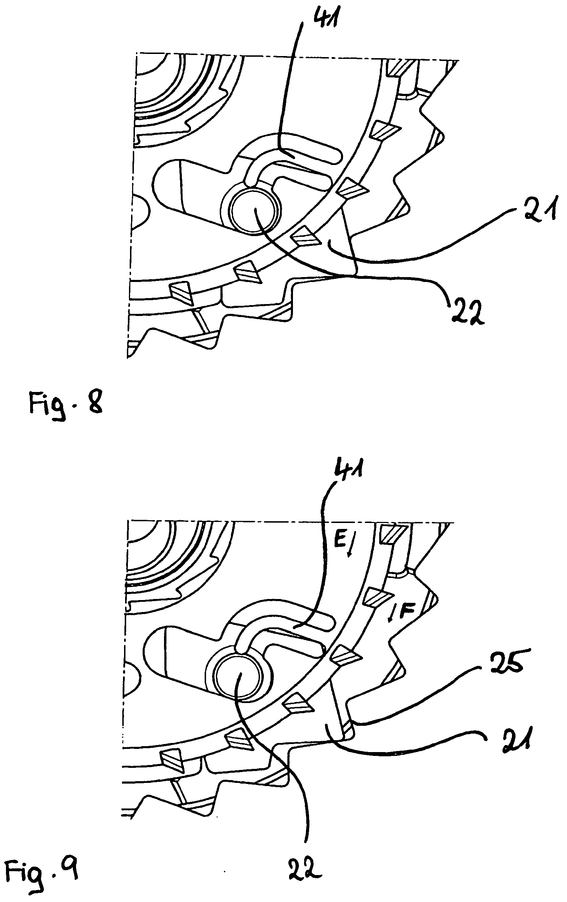

In den Fig.6 bis 9 ist eine alternative Möglichkeit der Kopplung von Steuerscheibe 11 und Sperrglied 21 dargestellt. In Fig.6 ist der Stift 22 in der Steuerkontur 40 in der Entriegelungsstellung zu erkennen. Nach dem Anhalten der Steuerscheibe 11 fährt das Sperrglied 21 zunächst in die in Fig.7 gezeigte Stellung, in der die Gurtwelle verriegelt ist, indem das Sperrglied 21 an der Verzahnung 25 anliegt. Das Sperrglied 21 fährt dann unter Überwindung der von dem Federelement 41 ausgeübten Kraft in die Verriegelungsstellung (siehe Fig.8), in der das Sperrglied 21 vollständig in die Verzahnung eingesteuert ist. Das Federelement 41 ragt orthogonal in die Steuerkontur 40, so dass der Stift 22 durch das Federelement 41 nur radial beaufschlagt wird. Damit wird verhindert, dass die Steuerscheibe 11 nicht in axialer Richtung ausgelenkt wird. Ferner wirken dadurch auf den Stift in beide Bewegungsrichtungen in etwa identische Federkräfte. Zum Entriegeln der Gurtwelle wird diese, wie in Fig.9 zu erkennen, zunächst ein Stück in Gurtbandaufwickelrichtung gedreht (Pfeilrichtung F) und nimmt dabei die Steuerscheibe 11 in Pfeilrichtung E mit. Durch diese Drehbewegung der Steuerscheibe 11 werden dann die Sensoren wie oben beschrieben freigestellt, so dass anschließend die Gurtwelle durch weiteres Drehen der Steuerscheibe 11 gegenüber der Gurtwelle entriegelt wird.

## Patentansprüche

1. Selbstsperrender Gurtaufroller für Sicherheitsgurte mit einer drehbar in einem Gehäuserahmen gelagerten und in Aufwickelrichtung des Gurtbandes von einer Aufwickelfeder vorgespannten Gurtwelle, einer sich mit der Gurtwelle drehenden Steuerscheibe (11) zur Ansteuerung eines an der Gurtwelle bis zum Eingriff in eine Gehäuseverzahnung (25) auslenkbar angeordneten Sperrgliedes (21), wobei die Steuerscheibe (11) mittels eines die Gurtbandbeschleunigung sensierenden federbelasteten Trägheitselementes (13) und/oder einem fahrzeugsensitiven Beschleunigungssensor (30) gegen eine Federvorspannung in eine Relativdrehung gegenüber der Gurtwelle bringbar ist, **dadurch gekennzeichnet, dass** das Sperrglied (21) im ausgelenkten Zustand mit der Steuerscheibe (11) über ein Federelement gekoppelt ist, und
das Sperrglied (21) einen Stift (22) aufweist, welcher in eine die Ausfuhrbewegung des Sperrgliedes (21) bestimmende Steuerkontur (40) der Steuerscheibe (11) hineinragt, und das Federelement (41) an der Steuerkontur (40) angeordnet ist, und
das Federelement (41) im wesentlichen orthogonal in die durch die Steuerkontur (40) definierte Bahn der Ausfuhrbewegung hineinragt.

2. Gurtaufroller nach Anspruch 1, **dadurch gekennzeichnet, dass** das Federelement (41) das Sperrglied (21) in einer Richtung im wesentlichen parallel zu der durch die von der Steuerscheibe (11) aufgespannten Ebene belastet.

3. Gurtaufroller nach einem der vorangegangenen Ansprüche, **dadurch gekennzeichnet, dass** das Federelement (41) einstückig mit der Steuerscheibe (11) ausgebildet ist.

4. Gurtaufroller nach einem der vorangegangenen Ansprüche, **dadurch gekennzeichnet, dass** die Steuerscheibe (11) und/oder das Sperrglied (21) relativ zu der Gurtwelle in Richtung der Entriegelungsstellung des Sperrgliedes (21) federvorgespannt sind, und dass das Sperrglied (21) und die Steuerscheibe (11) aus der Verriegelungsstellung durch Drehen der Gurtwelle in Gurtbandeinzugsrichtung nach dem Lösen der Kopplung durch die Federvorspannung selbsttätig in die Entriegelungsstellung bringbar sind.

## Claims

1. Self-locking seat belt retractor for seat belts with a belt shaft supported rotatably in a housing frame and pretensioned in the winding-up direction of the belt strap by a winding spring, a control disc (11) rotating with the belt shaft for activating a blocking element (21) arranged deflectably on the belt shaft up to engagement in a housing tooth system (25), wherein the control disc (11) can be brought into a relative rotation with regard to the belt shaft by means of a spring-loaded inertia element (13) sensing the belt strap acceleration and/or a vehicle-sensitive acceleration sensor, **characterised by** that the blocking element (21) is coupled in the deflected state to the control disc (11) via a spring element, and the blocking element (21) has a pin (22), which protrudes into a control contour (40) of the control disc (11) determining the withdrawal movement of the blocking element (21), and the spring element (41) is arranged on the control contour (40), and the spring element (41) protrudes substantially orthogonally into the path of the withdrawal movement defined by the control contour (40).

2. Seat belt retractor according to claim 1, **characterised by** that the spring element (41) loads the blocking element (21) in a direction substantially parallel to the plane spanned by the control disc (11).

3. Seat belt retractor according to one of the preceding claims, **characterised by** that the spring element (41) is formed in one piece with the control disc (11).

4. Seat belt retractor according to one of the preceding claims, **characterised by** that the control disc (11) and/or the blocking element (21) are spring-pretensioned relative to the belt shaft in the direction of the release position of the blocking element (21) and the blocking element (21) and the control disc (11) can be brought automatically from the latching position into the release position by turning the belt shaft in the belt strap retraction direction following the release of the coupling by the spring pretensioning.

## Revendications

1. Enrouleur de ceinture de sécurité auto-bloquant équipé d'un arbre de ceinture pivotant dans un châssis et précontraint dans le sens d'enroulement de la sangle par un ressort d'enroulement, d'un disque de réglage (11) tournant avec l'arbre de ceinture pour commander un élément de verrou (21) agencé de manière à pouvoir dévier sur l'arbre de ceinture jusqu'à venir en prise dans un engrenage du boîtier (25), le disque de réglage (11) pouvant être amené, contre une précontrainte élastique, à effectuer une rotation relative par rapport à l'arbre de ceinture au moyen d'un élément d'inertie (13) contraint par ressort et permettant de détecter l'accélération de la sangle et/ou au moyen d'un capteur d'accélération (30) sensible au véhicule, **caractérisé en ce qu**'à **l**'état dévié, l'élément de verrou (21) est couplé au disque de réglage (11) par le biais d'un élément élastique, en ce que l'élément de verrou (21) présente un goujon (22) pénétrant dans un contour de commande (40) du disque de commande (11) déterminant le mouvement de sortie de l'élément de verrou (21), en ce que l'élément élastique (41) est disposé sur le contour de commande (40) et en ce que l'élément élastique (41) pénètre essentiellement de manière orthogonale dans la voie du mouvement de sortie définie par le contour de commande (40).

2. Enrouleur de ceinture de sécurité selon la revendication 1, **caractérisé en ce que** l'élément élastique (41) contraint l'élément de verrou (21) dans une direction essentiellement parallèle au plan tendu par le disque de commande (11).

3. Enrouleur de ceinture de sécurité selon l'une quelconque des revendications précédentes, **caractérisé en ce que** l'élément élastique (41) est conçu d'un seul tenant avec le disque de commande (11).

4. Enrouleur de ceinture de sécurité selon l'une quelconque des revendications précédentes, **caractérisé en ce que** le disque de commande (11) et/ou l'élément de verrou (21) sont précontraints par un ressort par rapport à l'arbre de ceinture dans la direction de la position de déverrouillage de l'élément de verrou (21) et **en ce que** la rotation de l'arbre de ceinture dans la direction d'entrée de la sangle permet d'amener de manière autonome l'élément de verrou (21) et le disque de commande (11) de la position de verrouillage à la position de déverrouillage, après rupture du couplage sous l'effet de la précontrainte exercée par le ressort.
